# EUROPÄISCHE PATENTSCHRIFT

(11) **EP 3 084 533 B1**
(45) Veröffentlichungstag und Bekanntmachung des Hinweises auf die Patenterteilung: **23.10.2019**
(21) Anmeldenummer: 14798871.1
(22) Anmeldetag: 14.11.2014
(51) Int. Cl.: G05B 19/042, H02M 3/07

(54) **FELDGERÄT ZUR ERFASSUNG ODER ÜBERWACHUNG EINER PHYSIKALISCHEN ODER CHEMISCHEN PROZESSGRÖSSE EINES MEDIUMS**
FIELD DEVICE FOR DETECTING OR MONITORING A PHYSICAL OR CHEMICAL PROCESS VARIABLE OF A MEDIUM
APPAREIL DE TERRAIN PERMETTANT DE DÉTECTER OU DE SURVEILLER UN PARAMÈTRE DE PROCESSUS PHYSIQUE OU CHIMIQUE D'UN FLUIDE

(30) Priorität: 18.12.2013 DE 102013114377
(43) Veröffentlichungstag der Anmeldung: 26.10.2016
(73) Patentinhaber: Endress+Hauser SE+Co. KG, 79689 Maulburg (DE)
(72) Erfinder: RUF, Klaus, 79618 Rheinfelden (DE); GIRARDEY, Romuald, 68730 Blotzheim (DE); KLÖFER, Peter, 79585 Steinen (DE); HORTENBACH, Martin, 76351 Linkenheim-Hochstetten (DE)
(74) Vertreter: Andres, Angelika Maria
(86) Internationale Anmeldenummer: PCT/EP2014/074619
(87) Internationale Veröffentlichungsnummer: WO 2015/090758

(56) Entgegenhaltungen:
- EP-A2- 0 883 097
- DE-A1- 2 052 382
- DE-A1- 2 435 392
- DE-A1- 4 212 864
- US-A- 5 187 421

## Beschreibung

Die Erfindung betrifft ein Feldgerät zur Erfassung oder Überwachung einer physikalischen oder chemischen Prozessgröße eines Mediums in der Automatisierungstechnik mit einem auf der Primärseite angeordneten Stromausgang und mit einer auf der Sekundärseite angeordneten Elektronikeinheit, die über zwei Verbindungsleitungen von der Primärseite her mit Energie versorgt wird, wobei die Elektronikeinheit den Stromausgang so ansteuert, dass der auf den Verbindungsleitungen fließende Gleichstrom den Wert der auf der Sekundärseite erfassten Prozessgröße repräsentiert, mit zumindest einer Kommunikationseinheit, die digitale Daten bereitstellt, und mit einem galvanisch entkoppelten Übertragungsmittel, das die digitalen Daten zwischen der Primärseite und der Sekundärseite überträgt.

In der Automatisierungstechnik, insbesondere in der Prozessautomati-sierungstechnik, werden Feldgeräte eingesetzt, die zur Bestimmung und Überwachung von Prozessvariablen dienen. Beispiele für derartige Feldgeräte sind Füllstandsmessgeräte, Durchflussmessgeräte, Analysemessgeräte, Druck- und Temperaturmessgeräte, Feuchte- und Leitfähigkeitsmessgeräte, Dichte und Viskositätsmessgeräte. Die Sensoren dieser Feldgeräte erfassen die entsprechenden Prozessvariablen, z.B. den Füllstand, den Durchfluss, den pH-Wert, die Stoffkonzentration, den Druck, die Temperatur, die Feuchte, die Leitfähigkeit, die Dichte oder die Viskosität.

Unter den Begriff 'Feldgeräte' werden in Verbindung mit der Erfindung aber auch Aktoren, z. B. Ventile oder Pumpen, subsumiert, über die beispielsweise der Durchfluss einer Flüssigkeit in einer Rohrleitung oder der Füllstand in einem Behälter veränderbar ist. Eine Vielzahl solcher Feldgeräte wird von der Firmengruppe Endress + Hauser angeboten und vertrieben.

Weit verbreitet in der Automatisierungstechnik ist der 4-20mA Standard. Hierbei wird der auf einer Leitung fließende Gleichstrom so eingestellt, dass er jeweils den aktuellen Wert der Prozessgröße repräsentiert. Handelt es sich um ein Zweidraht-Gerät, so erfolgen die Energieversorgung und die Datenübertragung über die gleiche Zweidrahtleitung.

Eine Signalwnadler-Schaltung für ein 4-20 mA basiertes Feldgerät wird beiepsielsweise in der europäischen Veröffentlichungsschrift EP 883 097 A2 beschrieben. Die dort beschriebene Signalwandler-Schaltung zeichnet sich dadurch aus, dass die Spannung invers zur Stromstärke geregelt wird und somit eine konstante Leistung gewährleistet wird.

Um die Übertragung von leitungsgebundenen elektromagnetischen Störungen zwischen der Primärseite und der Sekundärseite zu verhindern, ist es aus dem Stand der Technik bekannt geworden, entweder eine Filterschaltung oder eine galvanische Trennung zu verwenden.

Beide bekannten Lösungen haben sowohl Vorteile als auch Nachteile. So haben Filterschaltungen den Vorteil, dass sie kostengünstig und einfach realisierbar sind. Allerdings ist es schwierig bis nahezu unmöglich, eine gute breitbandige Entstörung zu realisieren. Um eine breitbandige Entstörung erreichen, muss die Filterfunktion an die Systemempfindlichkeit angepasst werden, was wiederum eine komplexe Entwicklung erfordert.

Die deutsche Veröffentlichungsschrift DE 42 12 864 A1 beschreibt einen miniaturisierten Wechselspannungswandler mit galvanischer Trennung. Er basiert auf zwei über kreuz angeordneten Schalterpaaren mit jeweils einem dazwischen angeordneten Energiespeicher, wobei die Kapazität der Energiespeicher zur Einstellung des gewünschten Spannungsverhältnisses entsprechend dimensioniert werden.

Eine galvanische Trennung, z.B. basierend auf Transformatoren bzw. Übertragern, ist komplexer zu entwickeln als eine Filterschaltung, bringt aber eine gute Entkopplung zwischen der Primärseite und der Sekundärseite hinsichtlich leitungsgebundener elektromagnetischer Störungen. Allerdings ist die Entkopplung nicht perfekt Aufgrund der Konstruktion eines Transformators/Übertragers besteht üblicherweise eine kapazitive Kopplung zwischen der Primärseite und der Sekundärseite. Infolge der kapazitiven Kopplung können elektromagnetische Störungen von der Primärseite auf die Sekundärseite übertragen werden. Hinzu kommt, dass der Wirkungsgrad in der Regel maximal zwischen 70% und 80% liegt, was für Zweidraht-Geräte, denen eine begrenzte Energie zur Verfügung steht, durchaus kritisch sein kann. Auch erweist sich die Übertragung von statischen Signalen über eine galvanische Trennung als relativ komplex.

Der Erfindung liegt die Aufgabe zugrunde, ein Feldgerät vorzuschlagen, bei dem die Entkopplung zwischen der Primärseite und der Sekundärseite hinsichtlich leitungsgebundener elektromagnetischer Störungen verbessert ist. Die Verbesserung ist bezogen auf die galvanischen Trennung mittels Transformatoren bzw. Übertragern. Zwischen der Primärseite und der Sekundärseite werden sowohl Energie als auch Daten übertragen.

Die Aufgabe wird dadurch gelöst, dass eine Schaltungsanordnung vorgesehen ist
- mit zwei Schaltern eines primärseitigen Schalterpaars, wobei in jeder Verbindungsleitung ein Schalter des primärseitigen Schalterpaares angeordnet ist,
- mit zwei Schaltern von zumindest einem sekundärseitigen Schalterpaar, wobei in jeder Verbindungsleitung ein Schalter des sekundärseitigen Schalterpaares angeordnet ist,
- mit einem zwischen der Primärseite und der Sekundärseite angeordneten Energie-Zwischenspeicher und einem der Sekundärseite zugeordneten sekundärseitigen Energiespeicher, wobei die beiden Energiespeicher parallel zueinander geschaltet sind und
- mit zumindest einer elektronischen Steuerschaltung, die die Schalterpaare abwechselnd so ansteuert, dass die Primärseite und die Sekundärseite galvanisch voneinander getrennt sind.

Die Grundidee der Erfindung ist es, die Sekundärseite von der Primärseite mit Hilfe einer geeigneten zeitlichen Steuerschaltung von elektromechanischen oder elektronischen Schalterpaaren permanent galvanisch zu trennen.

Gemäß einer vorteilhaften Ausgestaltung ist das erfindungsgemäße Feldgerät entweder als Zweileiter-Gerät ausgestaltet, d.h. dass die Energieversorgung und die Kommunikation über dieselbe Zweidrahtleitung erfolgen, oder das erfindungsgemäße Feldgerät ist als Vierleiter-Gerät ausgestaltet, d.h. die Energieversorgung und die Kommunikation erfolgen jeweils über zwei getrennte Verbindungsleitungen.

Weiterhin kann es sich bei dem erfindungsgemäßen Feldgerät entweder um ein Kompaktgerät handeln, bei dem die Komponenten der Primärseite und die Komponenten der Sekundärseite in einem Gehäuse angeordnet sind; alternativ handelt es sich bei dem erfindungsgemäßen Feldgerät um eine abgesetzten Version eines Feldgeräts. Hier ist ein Teil der Komponenten der Primärseite einem ersten Gehäuse zugeordnet, und der verbleibende Teil der Komponenten der Primärseite und die Komponenten der Sekundärseite sind einem zweiten Gehäuse zugeordnet. Bei der abgesetzten Version sind die beiden Gehäuse entfernt voneinander angeordnet und über ein Verbindungskabel miteinander verbunden.

In einer ersten vorteilhaften Ausgestaltung des erfindungsgemäßen Feldgeräts ist der Energie-Zwischenspeicher zwischen dem primärseitigen Schalterpaar und dem sekundärseitigen Schalterpaar in Parallelschaltung angeordnet. Dem sekundärseitigen Schalterpaar ist ein sekundärseitiger Energiespeicher in Parallelschaltung zu dem Energie-Zwischenspeicher nachgeschaltet. Die zumindest eine Steuerschaltung schließt abwechselnd während eines vorgegebenen oder variablen ersten Zeitintervalls die Schalter des primärseitigen Schalterpaares und öffnet die Schalter des sekundärseitigen Schalterpaares. Während eines nachfolgenden vorgegebenen oder variablen zweiten Zeitintervalls werden die Schalter des sekundärseitigen Schalterpaares geschlossen und die Schalter des primärseitigen Schalterpaares geöffnet. Die Zeitintervalle sind so bemessen, dass stets ausreichend Energie auf der Sekundärseite zum Betrieb der Elektronikeinheit zur Verfügung steht. Insbesondere sind die Zeitintervalle auf die Kapazitäten der Energiespeicher abgestimmt.

Gemäß einer alternativen Ausgestaltung des erfindungsgemäßen Feldgeräts sind zwischen dem primärseitigen Schalterpaar und dem sekundärseitigen Schalterpaar in Parallelschaltung zwei Energie-Zwischenspeicher vorgesehen. Dem sekundärseitigen Schalterpaar ist weiterhin ein sekundärseitiger Energiespeicher in Parallelschaltung zu den beiden Energie-Zwischenspeichern nachgeschaltet. Die zumindest eine Steuerschaltung verbindet abwechselnd während eines vorgegebenen oder variablen ersten Zeitintervalls über die Schalter des primärseitigen Schalterpaares den zweiten Energie-Zwischenspeicher mit der Energieversorgung und über die Schalter des sekundärseitigen Schalterpaares den ersten Energie-Zwischenspeicher mit dem sekundärseitigen Energiespeicher; während eines vorgegebenen oder variablen zweiten Zeitintervalls wird über die Schalter des sekundärseitigen Schalterpaares der zweite Energie-Zwischenspeicher mit dem sekundärseitigen Energiespeicher und über die Schalter des primärseitigen Schalterpaares der erste Energie-Zwischenspeicher mit der Energieversorgung verbunden. Bei dieser Ausgestaltung wird die Elektronikeinheit permanent mit Energie versorgt, jedoch wird die Übertragung von leitungsgebundene elektromagnetische Störungen zwischen der Primärseite und der Sekundärseite dauerhaft unterbunden.

Um die galvanische Trennung auch bei einer abgesetzten Version des Feldgeräts zu erreichen, sind auf der Primärseite ein zweites primärseitiges Schalterpaar mit jeweils einem Schalter in jeder der beiden Verbindungsleitungen und eine zweite primärseitige Steuerschaltung vorgesehen. Der Primärseite sind weiterhin die Schalter des primärseitigen Schalterpaares und die primärseitige Steuerschaltung zugeordnet. Auf der Sekundärseite ist das sekundärseitige Schalterpaar mit jeweils einem Schalter in jeder der beiden Verbindungsleitungen vorgesehen. Der Energie-Zwischenspeicher ist in Parallelschaltung zwischen dem primärseitigen Schalterpaar und dem sekundärseitigen Schalterpaar angeordnet. Der sekundärseitige Energiespeicher ist in Parallelschaltung zu dem Energie-Zwischenspeicher angeordnet. Abwechselnd wird zwischen den beiden nachfolgenden Betriebszuständen hin und her geschaltet: Die zweite primärseitige Steuerschaltung schließt während eines ersten Zeitintervalls die Schalter des zweiten primärseitigen Schalterpaares, simultan schließt die erste primärseitige Steuerschaltung die Schalter des primärseitigen Schalterpaares und die sekundärseitige Steuerschaltung öffnet simultan die Schalter des sekundärseitigen Schalterpaares. Während eines zweiten Zeitintervalls öffnet die zweite primärseitige Steuerschaltung die Schalter des zweiten primärseitigen Schalterpaares, simultan öffnet die erste primärseitige Steuerschaltung die Schalter des primärseitigen Schalterpaares, und die sekundärseitige Steuerschaltung schließt simultan die Schalter des sekundärseitigen Schalterpaares.

Bevorzugt handelt es sich bei den Energiespeichern um Kondensatoren oder um Akkus. Bei Verwendung von Kondensatoren ist die Kapazität der Kondensatoren und/oder die Länge der vorgegebenen Zeitintervalle so bemessen ist, dass die minimale Energie, die das Feldgerät für den Betrieb benötigt, jederzeit verfügbar ist. Analog ist die Handhabung im Falle von Akkus.

Gemäß einer vorteilhaften Weiterbildung des erfindungsgemäßen Feldgeräts handelt es sich bei den Schaltern der Schalterpaare um kapazitiv entkoppelte Schalter. Hierbei besteht ein kapazitiv entkoppelter Schalter aus zwei in Reihe geschalteten Schaltern und einem parallel geschalteten dritten Schalter. Die Verbindungsleitung der beiden Schalter ist im geöffneten Zustand des kapazitiv entkoppelten Schalters über den dritten Schalter mit Masse verbunden. Als Schaltern werden entweder Relais oder Transistoren verwendet.

Bei den galvanisch getrennten Übertragungsmitteln handelt es sich um optische Übertragungsstrecken (Lichtfaserkabel oder Optokoppler), um kapazitive oder Funk-Übertragungsstrecken.

Die Erfindung wird anhand der nachfolgenden Figuren näher erläutert. Es zeigt:
Fig. 1: ein Blockschaltbild, das eine erste Ausgestaltung des erfindungs-gemäßen Feldgeräts in Kompaktversion zeigt,
Fig. 2: ein Blockschaltbild, das eine zweite Ausgestaltung des erfindungs-gemäßen Feldgeräts in Kompaktversion zeigt,
Fig. 3: ein Blockschaltbild, das eine Ausgestaltung des erfindungsgemäßen Feldgeräts in der abgesetzten Version zeigt,
Fig. 4: ein Blockschaltbild einer bevorzugten Ausführungsform der in den vorhergehenden Figuren gezeigten Schalter und
Fig. 5: ein Blockschaltbild einer bevorzugten Ausführungsform der in Fig. 2 gezeigten Schalterkombination.

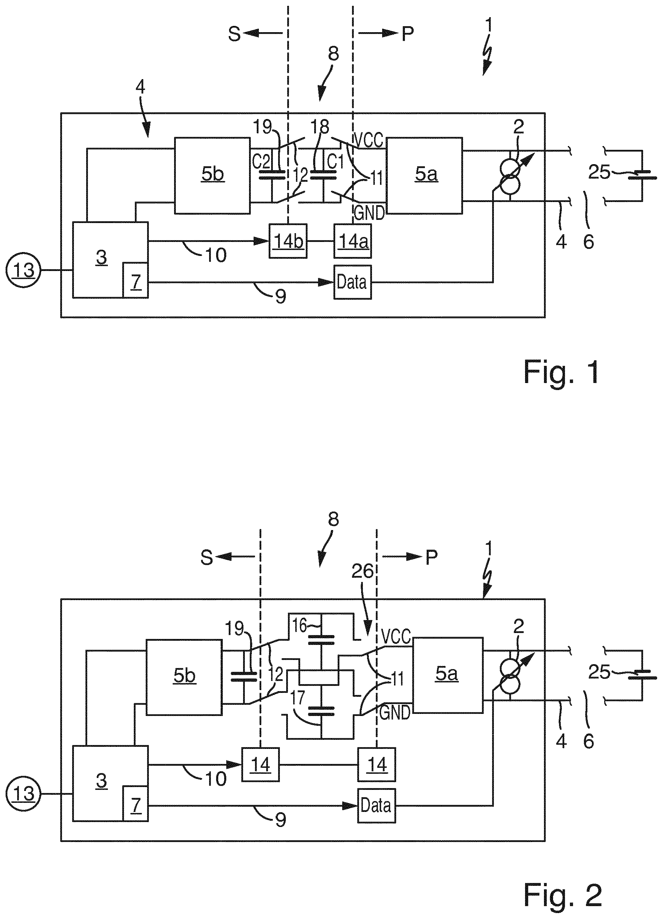

Fig. 1 zeigt ein Blockschaltbild, das eine erste Ausgestaltung des erfindungsgemäßen Feldgeräts in Kompaktversion zeigt. Das erfindungsgemäße Feldgerät dient bevorzugt zur Erfassung oder Überwachung einer physikalischen oder chemischen Prozessgröße eines Mediums in der Automatisierungstechnik. Beispiele für Feldgeräte und Prozessgrößen wurden bereits in der Beschreibungseinleitung genannt.

Auf der Primärseite P ist ein Stromausgang 6 angeordnet, während sich auf der Sekundärseite S die Elektronikeinheit 3 befindet. Die Elektronikeinheit 3 ist einem Sensor 13 zugeordnet. Die Elektronikeinheit 3 auf der Sekundärseite S wird im gezeigten Fall über eine Zweidrahtleitung 4 von der Primärseite P her mit Energie versorgt. Die Energie wird von einer entfernt angeordneten Spannungsquelle 25 bereitgestellt. Die Spannungsregler 5a, 5b dienen der Transformation der Spannung der Spannungsquelle 25 auf die Spannung, die die Elektronikeinheit 3 für den Betrieb benötigt. Im gezeigten Fall ist der Spannungsregler 5a auf der Primärseite P als Aufwärtsregler ausgestaltet, während es sich bei dem Spannungsregler 5b auf der Sekundärseite S um einen Abwärtsregler handelt.

Die Elektronikeinheit 3 steuert den Stromausgang 6 so an, dass der auf der Zweidrahtleitung 4 fließende Gleichstrom den Wert der auf der Sekundärseite S erfassten Prozessgröße repräsentiert. Weiterhin ist auf der Sekundärseite S eine Kommunikationseinheit 7 angeordnet, die digitale Daten Data bereitstellt, und über die Verbindungsleitung 9 zur Primärseite P überträgt. Bei der Verbindungsleitung 9 handelt es sich um ein galvanisch entkoppeltes Übertragungsmittel. Beispiele für geeignet Übertragungsmittel wurden bereits an vorhergehender Stelle genannt. Es versteht sich von selbst, dass die Kommunikation auch von der Primärseite P zur Sekundärseite S erfolgen kann. Bei den digitalen Daten kann es sich beispielsweise um Kalibrierdaten, Parametrierdaten oder um Statusinformation handeln. Diese Kommunikationsdaten werden im gezeigten Falle eines Zweidrahtgeräts auf das Gleichstromsignal, das den Wert der Prozessgröße widerspiegelt, aufmoduliert.

Bei der in Fig. 1 gezeigten Ausgestaltung werden für die galvanische Trennung 8 zwischen der Primärseite P und der Sekundärseite S zwei Schalterpaare 11, 12 verwendet, die über zwei Steuerschaltungen 14 geeignet geschaltet werden. Das Schalterpaar 11 ist auf der Primärseite P angeordnet. Jeweils einer der beiden Schalter des Schalterpaares 11 ist in einer der beiden Verbindungsleitungen der Zweidrahtleitung 4 angeordnet.

Das Schalterpaar 12 ist auf der Sekundärseite S angeordnet. Jeweils einer der beiden Schalter des Schalterpaares 12 ist gleichfalls in einer der beiden Verbindungsleitungen der Zweidrahtleitung 4 angeordnet. In jeder Verbindungsleitung der Zweidrahtleitung 4 ist somit jeweils ein Schalter des Schalterpaares 11 mit einem Schalter des Schalterpaares 12 in Reihe geschaltet. Die Schalter des Schalterpaares 11 auf der Primärseite P werden von der Steuerschaltung 14a angesteuert, während die Schalter des Schalterpaares 12 auf der Sekundärseite S von der Steuerschaltung 14b angesteuert werden. Die Synchronisation der beiden Steuerschaltungen 14a, 14b erfolgt von der Elektronikeinheit 3 über die Übertragungsleitung 10.

Zwischen den beiden Schalterpaaren 11, 12, die auf der Primärseite P und der Sekundärseite S vorgesehen sind, ist ein - Energie-Zwischenspeicher, hier der Kondensator 18 mit der Kapazität C1, parallel geschaltet. Ein weiterer Energiespeicher - hier der Kondensator 19 mit der Kapazität C2 - befindet sich hinter dem Schalterpaar 12 auf der Sekundärseite S. Der Energie-Zwischenspeicher 18 und der Energiespeicher 19 auf der Sekundärseite S sind parallel geschaltet. Die gezeigte Schaltungsanordnung erlaubt es, die Elektronikeinheit 3 auf der Sekundärseite S kontinuierlich zu betreiben, und dennoch die Primärseite P von der Sekundärseite S permanent zu entkoppeln. Hierzu müssen die Schalter der Schalterpaare 11, 12 geeignet angesteuert werden.

Die Ansteuerung der Schalterpaare 11, 12 über die Steuerschaltungen 14a, 14b wird nachfolgend beschrieben: Während eines ersten Zeitintervalls werden die Schalter des Schalterpaares 11 geschlossen, und der Energie-Zwischenspeicher 18 wird aufgeladen. Gleichzeitig sind die Schalter des Schalterpaares 12 geöffnet.

Während eines darauffolgenden zweiten Zeitintervalls werden die Schalter des Schalterpaares 11 geöffnet und simultan werden die Schalter des Schalterpaares 12 geschlossen. Als Folge dieser Schaltungsabfolge wird die Ladung vom Energie-Zwischenspeicher bzw. vom Kondensator 18 auf den Kondensator 19, der auf der Sekundärseite S angeordnet ist, übertragen. Nachfolgend werden die Schalter des Schalterpaares 12 während des ersten Zeitintervalls wieder geöffnet, und die Schalter des Schalterpaares 11 werden geschlossen. Während der Ladephase des Kondensators 18 wird die Elektronikeinheit 3 auf der Sekundärseite S von dem Kondensator 19 mit Energie versorgt. Anschließend folgt wieder die Beschaltung der Schaltungsanordnung entsprechend dem bereits zuvor dargelegten zweiten Zeitintervall.

Bei der in Fig. 2 gezeigten Lösung sind zwischen die Schalterpaare 11, 12 auf der Primärseite P und der Sekundärseite S in Parallelschaltung zwei Energie-Zwischenspeicher bzw. zwei Kondensatoren 16, 17 geschaltet. Dem sekundärseitigen Schalterpaar 12 ist ein sekundärseitiger Energiespeicher 19 in Parallelschaltung zu den beiden Energie-Zwischenspeichern 16, 17 nachgeschaltet. Den Schalterpaaren 11, 12, ist jeweils eine Steuerschaltung 14 zugeordnet. Die beiden Steuerschaltungen 14 werden so synchronisiert, dass abwechselnd in einem ersten Zeitintervall und in einem zweiten Zeitintervall zwischen zwei definierten Schaltzuständen hin- und hergeschaltet wird.

Während des Schaltzustandes im ersten vorgegebenen oder variablen Zeitintervall wird über die Betätigung der Schalter des primärseitigen Schalterpaares 11 der zweite Energie-Zwischenspeicher 17 mit der Energie- bzw. Spannungsversorgung 25 und über die Betätigung der Schalter des sekundärseitigen Schalterpaares 12 der erste Energie-Zwischenspeicher 16 mit dem sekundärseitigen Energiespeicher 19 verbunden. Während des Schaltzustandes im zweiten vorgegebenen oder variablen Zeitintervall wird über die Betätigung der Schalter des sekundärseitigen Schalterpaares 12 der zweite Energie-Zwischenspeicher 17 mit dem sekundärseitigen Energiespeicher 19 und über die Betätigung der Schalter des primärseitigen Schalterpaares 11 der erste Energie-Zwischenspeicher 16 mit der Energieversorgung 25 verbunden. Zu keinem Zeitpunkt besteht auch bei dieser Ausgestaltung eine elektrische Verbindung zwischen der Primärseite P und der Sekundärseite S. Die Energieversorgung erfolgt entweder über den Energie-Zwischenspeicher 16 oder über den Energie-Zwischenspeicher 17. Die Kapazität des Energiespeichers 19 kann klein bemessen werden, da er nicht mehr für die Energieversorgung während des zweiten Zeitintervalls ausgelegt sein muss, sondern nur noch als "Überbrückungs-Kondensator" während des Umschaltens zwischen den beiden Energie-Zwischenspeichern 16, 17 dient.

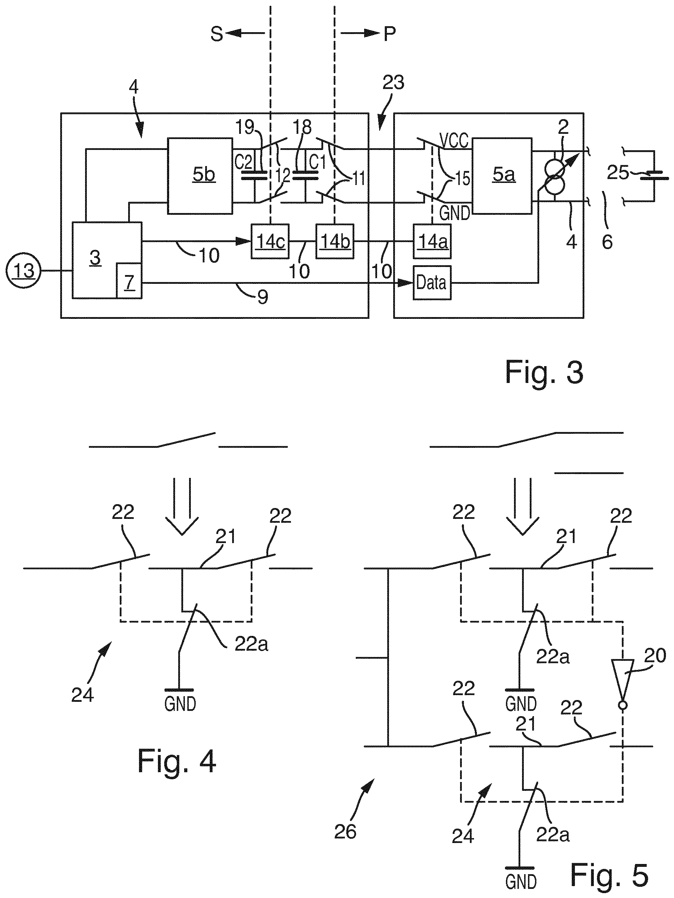

In Fig. 3 ist eine zu der Kompaktversion in Fig. 1 analoge Ausgestaltung des erfindungsgemäßen Feldgeräts für eine abgesetzte Version des Feldgeräts gezeigt. Hier sind auf der Primärseite P ein zweites primärseitiges Schalterpaar 15 mit jeweils einem Schalter in jeder der beiden Verbindungsleitungen der Zweidrahtleitung 4 und eine zweite primärseitige Steuerschaltung 14a vorgesehen. Der Primärseite P sind weiterhin die Schalter des primärseitigen Schalterpaares 11 und die primärseitige Steuerschaltung 14b zugeordnet. Auf der Sekundärseite S befindet sich das sekundärseitige Schalterpaar 12 mit jeweils einem Schalter in jeder der beiden Verbindungsleitungen der Zweidrahtleitung 4 und die sekundärseitige Steuerschaltung 14c. Der Energie-Zwischenspeicher 18 ist in Parallelschaltung zwischen dem primärseitigen Schalterpaar 11 und dem sekundärseitigen Schalterpaar 12 angeordnet. Der sekundärseitige Energiespeicher 19 ist in Parallelschaltung zu dem Energie-Zwischenspeicher 18 angeordnet.

Wiederum werden abwechselnd während eines ersten Zeitintervalls und eines zweiten Zeitintervalls zwei unterschiedliche Schaltzustände angesteuert.
Während des ersten Zeitintervalls schließen die zweite primärseitige Steuerschaltung 14a die Schalter des zweiten primärseitigen Schalterpaares 15 und die primärseitige Steuerschaltung 14b die Schalter des primärseitigen Schalterpaares 11, während die sekundärseitige Steuerschaltung 14c simultan die Schalter des sekundärseitigen Schalterpaares 12 öffnet. Während des zweiten Zeitintervalls öffnen die zweite primärseitige Steuerschaltung 14a die Schalter des zweiten primärseitigen Schalterpaares 15 und die primärseitige Steuerschaltung 14b die Schalter des primärseitigen Schalterpaares 11. Simultan schließt die sekundärseitige Steuerschaltung 14c die Schalter des sekundärseitigen Schalterpaares 12.

In Fig. 4 ist ein Blockschaltbild eines der in den vorhergehenden Figuren gezeigten Schalter der Schalterpaare 11, 12, 15 dargestellt. Die bevorzugte Ausführungsform verhindert eine kapazitive Kopplung in den Schaltern der Schalterpaare 11, 12, 15. Bei den bevorzugt in Verbindung mit der Erfindung eingesetzten Schaltern der Schalterpaare 11, 12, 15 handelt es sich um kapazitiv entkoppelte Schalter 24. Bei einem kapazitiv entkoppelten Schalter 24 wird im abgeschalteten Zustand der Mittelpunkt M mit Masse GND verbunden. Über diese Verbindung werden jegliche leitungsbedingten Störungen nach Masse GND abgeleitet. Alle Schalter der Schalterpaare 11, 12, 15 -ob sie nun einfach oder optimiert ausgestaltet sind - können mit Relais oder Transistoren realisiert werden.

Fig. 5 zeigt ein Blockschaltbild einer bevorzugten Ausführungsform der in Fig. 2 gezeigten Schalterkombination 26. In Fig. 5 ist die Schalterkombination 26 aus zwei kapazitiv entkoppelten Schaltern 24 aufgebaut. Ist einer der beiden Schalter 24 offen, so ist der andere Schalter 24 geschlossen. Zwecks Realisierung des Schaltverhaltens der beiden Schalter 24 ist ein Inverter 27 vorgesehen.

### Bezugszeichenliste

- 1: Feldgerät
- 2: Stromausgangsregelung
- 3: Elektronikeinheit
- 4: Zweidrahtleitung
- 5: Spannungsregler
- 6: Stromausgang
- 7: Kommunikationseinheit
- 8: Galvanische Trennung
- 9: Übertragungsmittel
- 10: Übertragungsmittel
- 11: Schalterpaar (Primärseite)
- 12: Schalterpaar (Sekundärseite)
- 13: Sensor
- 14: Steuerschaltung
- 15: Zweites Schalterpaar (Primärseite)
- 16: Energie-Zwischenspeicher
- 17: Energie-Zwischenspeicher
- 18: Energie-Zwischenspeicher
- 19: Energiespeicher
- 20: Inverter
- 21: Verbindungsleitung
- 22: Schalter
- 23: Verbindungskabel
- 24: kapazitiv entkoppelter Schalter
- 25: Energieversorgung / Spannungsversorgung
- 26: Schalterkombination

## Patentansprüche

1. Feldgerät zur Erfassung oder Überwachung einer physikalischen oder chemischen Prozessgröße eines Mediums in der Automatisierungstechnik mit einem auf der Primärseite (P) angeordneten Stromausgang (6) und mit einer auf der Sekundärseite (S) angeordneten Elektronikeinheit (3, 13), die über zwei Verbindungsleitungen (4) von der Primärseite (P) her mit Energie versorgt wird, wobei die Elektronikeinheit (3) den Stromausgang (6) so ansteuert, dass der auf den Verbindungsleitungen (4) fließende Gleichstrom den Wert der auf der Sekundärseite (S) erfassten Prozessgröße repräsentiert, mit zumindest einer Kommunikationseinheit (7), die digitale Daten (Data) bereitstellt **gekennzeichnet durch** ein galvanisch entkoppeltes Übertragungsmittel (9), das die digitalen Daten (Data) zwischen der Primärseite (P) und der Sekundärseite (S) überträgt, wobei eine Schaltungsanordnung vorgesehen ist mit zwei Schaltern eines primärseitigen Schalterpaars (11), wobei in jeder Verbindungsleitung (4) ein Schalter des primärseitigen Schalterpaares (11) angeordnet ist, mit zwei Schaltern von zumindest einem sekundärseitigen Schalterpaar (12), wobei in jeder Verbindungsleitung (4) ein Schalter des sekundärseitigen Schalterpaares (12) angeordnet ist, mit einem zwischen der Primärseite (P) und der Sekundärseite (S) angeordneten Energie-Zwischenspeicher (18) und einem der Sekundärseite (S) zugeordneten sekundärseitigen Energiespeicher (19),
wobei die beiden Energiespeicher (18, 19) parallel zueinander geschaltet sind und mit zumindest einer elektronischen Steuerschaltung (14), die die Schalterpaare (11, 12) abwechselnd so ansteuert, dass die Primärseite (P) und die Sekundärseite (S) galvanisch voneinander getrennt sind.

2. Feldgerät nach Anspruch 1,
**dadurch gekennzeichnet, dass**
das Feldgerät als Zweileiter-Gerät ausgestaltet ist, so dass die Energieversorgung und
die Kommunikation über dieselben Verbindungsleitungen (4) erfolgen, oder
wobei das Feldgerät als Vierleiter-Gerät ausgestaltet ist, wobei die Energieversorgung und die Kommunikation über getrennte Verbindungsleitungen erfolgen.

3. Feldgerät nach Anspruch 1 oder 2,
**dadurch gekennzeichnet, dass**
die Komponenten der Primärseite (P) und die Komponenten der Sekundärseite (S) in einem Gehäuse angeordnet sind.

4. Feldgerät nach Anspruch 1 oder 2,
**dadurch gekennzeichnet, dass**
ein Teil der Komponenten der Primärseite (P) einem ersten Gehäuse zugeordnet ist,
wobei der verbleibende Teil der Komponenten der Primärseite (P) und die Komponenten der Sekundärseite (S) einem zweiten Gehäuse zugeordnet sind, und
wobei die beiden Gehäuse entfernt voneinander angeordnet sind und über ein Verbindungskabel (23) miteinander verbunden sind.

5. Feldgerät nach zumindest einem der Ansprüche 1-3,
**dadurch gekennzeichnet, dass**
der Energie-Zwischenspeicher (18) zwischen dem primärseitigen Schalterpaar (11) und
dem sekundärseitigen Schalterpaar (12) in Parallelschaltung angeordnet ist,
wobei dem sekundärseitigen Schalterpaar (12) der sekundärseitige Energiespeicher in Parallelschaltung zu dem Energie-Zwischenspeicher (18) nachgeschaltet ist, und
wobei die zumindest eine Steuerschaltung (14) abwechselnd während eines vorgegebenen oder variablen ersten Zeitintervalls die Schalter des primärseitigen Schalterpaares (11) schließt und die Schalter des sekundärseitigen Schalterpaares (12) öffnet und während eines vorgegebenen oder variablen zweiten Zeitintervalls die Schalter des sekundärseitigen Schalterpaares (12) schließt und die Schalter des primärseitigen Schalterpaares (11) öffnet.

6. Feldgerät nach zumindest einem der Ansprüche 1-3,
**dadurch gekennzeichnet, dass**
zwischen dem primärseitigen Schalterpaar (11) und dem sekundärseitigen Schalterpaar (12) in Parallelschaltung zwei Energie-Zwischenspeicher (16, 17) vorgesehen sind,
wobei dem sekundärseitigen Schalterpaar (12) der sekundärseitige Energiespeicher (19) in Parallelschaltung zu den beiden Energie-Zwischenspeichern (16, 17) nachgeschaltet ist, und
wobei die zumindest eine Steuerschaltung (14) abwechselnd während eines vorgegebenen oder variablen ersten Zeitintervalls über die Schalter des primärseitigen Schalterpaares (11) den zweiten Energie-Zwischenspeicher (17) mit der Energieversorgung (25) und über die Schalter des sekundärseitigen Schalterpaares (12) den ersten Energie-Zwischenspeicher (16) mit dem sekundärseitigen Energiespeicher (19) verbindet und während eines vorgegebenen oder variablen zweiten Zeitintervalls über die Schalter des sekundärseitigen Schalterpaares (12) den zweiten Energie-Zwischenspeicher (17) mit dem sekundärseitigen Energiespeicher (19) und über die Schalter des primärseitigen Schalterpaares (11) den ersten Energie-Zwischenspeicher (16) mit der Energieversorgung (25) verbindet.

7. Feldgerät nach einem oder mehreren der Ansprüche 1, 2 oder 4, **dadurch gekennzeichnet, dass**
auf der Primärseite (P) ein zweites primärseitiges Schalterpaar (15) mit jeweils einem Schalter in jeder der beiden Verbindungsleitungen (4) und eine zweite primärseitige Steuerschaltung (14a) vorgesehen sind,
wobei der Primärseite (P) die Schalter des primärseitigen Schalterpaares (11) und die primärseitige Steuerschaltung (14b) zugeordnet sind,
wobei auf der Sekundärseite (S) das sekundärseitige Schalterpaar (12) mit jeweils einem Schalter in jeder der beiden Verbindungsleitungen (4) vorgesehen ist,
wobei der Energie-Zwischenspeicher (18) in Parallelschaltung zwischen dem primärseitigen Schalterpaar (11) und dem sekundärseitigen Schalterpaar (12) angeordnet ist,
wobei der sekundärseitige Energiespeicher (19) in Parallelschaltung zu dem Energie-Zwischenspeicher (18) angeordnet ist,
wobei abwechselnd während eines ersten Zeitintervalls die zweite primärseitige Steuerschaltung (14a) die Schalter des zweiten primärseitigen Schalterpaares (15) und simultan die primärseitige Steuerschaltung (14b) die Schalter des primärseitigen Schalterpaares (11) schließt und simultan die sekundärseitige Steuerschaltung (14c) die Schalter des sekundärseitigen Schalterpaares (12) öffnet, und
wobei während eines zweiten Zeitintervalls die zweite primärseitige Steuerschaltung (14a) die Schalter des zweiten primärseitigen Schalterpaares (15) und simultan die primärseitige Steuerschaltung (14b) die Schalter des primärseitigen Schalterpaares (11) öffnet und simultan die sekundärseitige Steuerschaltung (14c) die Schalter des sekundärseitigen Schalterpaares (12) schließt.

8. Feldgerät nach zumindest einem der Ansprüche 1-7,
**dadurch gekennzeichnet, dass**
es sich bei den Energiespeichem (16,17,18, 19) um Kondensatoren oder um Akkus handelt.

9. Feldgerät nach Anspruch 8,
**dadurch gekennzeichnet, dass**
die Kapazität der Kondensatoren und/oder die Länge der vorgegebenen Zeitintervalle so bemessen ist, dass die minimale Energie, die das Feldgerät für den Betrieb benötigt, jederzeit verfügbar ist.

10. Feldgerät nach Anspruch 8,
**dadurch gekennzeichnet, dass**
es sich bei den Schaltern der Schalterpaare (11, 12, 15) um kapazitiv entkoppelte Schalter handelt.

11. Feldgerät nach Anspruch 10,
**dadurch gekennzeichnet, dass**
der kapazitiv entkoppelte Schalter (24) aus zwei in Reihe geschalteten Schaltern (22) und einem parallel geschalteten dritten Schalter (22a) besteht, wobei die Verbindungsleitung (21) der beiden Schalter (22) im geöffneten Zustand des kapazitiv entkoppelten Schalters (24) über den dritten Schalter (22a) mit Masse verbunden ist.

12. Feldgerät nach Anspruch 1, **dadurch gekennzeichnet, dass**
es sich bei den galvanisch getrennten Übertragungsmitteln (9, 10) um optische, kapazitive oder Funk-Übertragungsstrecken handelt.

13. Feldgerät nach einem der Ansprüche 1-9 oder 12, **dadurch gekennzeichnet, dass**
es sich bei den Schaltern der Schalterpaare (11, 12, 15) um Relais oder Transistoren handelt.

## Claims

1. Field device designed to measure or monitor a physical or chemical process variable of a medium in automation engineering with a current output (6) arranged on the primary side (P) and with an electronic unit (3, 13) arranged on the secondary side (S), said unit being supplied with energy from the primary side (P) via two connecting cables (4), wherein the electronic unit (3) controls the current output (6) in such a way that the DC current flowing through the connecting cables (4) represents the value of process variable measured on the secondary side (S), with at least a communication unit (7), which makes digital data (Data), available, **characterized by** a galvanically decoupled means of transmission (9), which transmits the digital data (Data) between the primary side (P) and the secondary side (S),
wherein a circuit arrangement is provided with two switches of a primary-side pair of switches (11), wherein a switch of the primary-side pair of switches (11) is arranged in every connecting cable (4), with two switches of at least one secondary-side pair of switches (12), wherein a switch of the secondary-side pair of switches (12) is arranged in each connecting cable (4), with an intermediate energy storage medium (18) arranged between the primary side (P) and the secondary side (S) and a secondary-side energy storage medium (19) assigned to the secondary side (S), wherein the two energy storage media (18, 19) are switched in parallel to one another and with at least one electronic control circuit (14) that alternately controls the pairs of switches (11, 12) in such a way that the primary side (P) and the secondary side (S) are galvanically isolated from one another.

2. Field device as claimed in Claim 1,
**characterized in that**
the field device is designed as a two-wire device such that the energy supply and the communication are via the same connecting cables (4), or
wherein the field device is designed as a four-wire device, wherein the energy supply and the communication are via separate connecting cables.

3. Field device as claimed in Claim 1 or 2,
**characterized in that**
the components of the primary side (P) and the components of the secondary side (S) are arranged in a housing.

4. Field device as claimed in Claim 1 or 2,
**characterized in that**
one part of the components of the primary side (P) is assigned to a first housing, wherein the remaining part of the components on the primary side (P) and the components of the secondary side (S) are assigned to a second housing, and wherein the two housings are arranged at a distance from one another and are interconnected by means of a connecting cable (23).

5. Field device as claimed in at least one of the previous Claims 1 to 3,
**characterized in that**
the intermediate energy storage medium (18) is arranged between the primary-side pair of switches (11) and the secondary-side pair of switches (12) in parallel circuitry,
wherein the secondary-side intermediate energy storage medium is downstream from the secondary-side pair of switches (12) in parallel circuitry with the intermediate energy storage medium (18), and
wherein, during a predefined or variable first time interval, the at least one control circuit (14) alternatively closes the switches of the primary-side pair of switches (11) and opens the switches of the secondary-side pair of switches (12), and, during a predefined or variable second time interval, closes the switches of the secondary-side pair of switches (12) and opens the switches of the primary-side pair of switches (11).

6. Field device as claimed in at least one of the Claims 1 to 3,
**characterized in that**
two intermediate energy storage media (16, 17) are provided in parallel circuitry between the primary-side pair of switches (11) and the secondary-side pair of switches (12),
wherein the secondary-side energy storage medium is downstream from the secondary-side pair of switches (12) in parallel circuitry with the two intermediate energy storage media (16, 17), and
wherein the at least one control circuit (14) alternately connects, during a predefined or variable first time interval, the second intermediate energy storage medium (17) with the power supply (25) via the switches of the primary-side pair of switches (11), and, via the switches of the secondary-side pair of switches (12), connects the first intermediate energy storage medium (16) with the secondary-side energy storage medium (19) and, during a predefined or variable second time interval, connects the second intermediate energy storage medium (17) with the secondary-side energy storage medium (19) via the switches of the secondary-side pair of switches, and connects the first intermediate energy storage medium (16) with the energy supply (25) via the switches of the primary-side pair of switches (11).

7. Field device as claimed in at least one or more of the Claims 1, 2 or 4,
**characterized in that**
on the primary side (P), a second primary-side pair of switches (15) is provided with one switch in each of the two connecting cables (4) and a second primary-side control circuit (14a),
wherein the switches of the primary-side pair of switches (11) and the control circuit on the primary side (14b) are assigned to the primary side (P), wherein on the secondary side (S), the secondary-side pair of switches (12) is provided in each case with a switch in each of the two connecting cables (4), wherein the intermediate energy storage medium (18) is arranged in parallel circuitry between the primary-side pair of switches (11) and the secondary-side pair of switches (12),
wherein the secondary-side energy storage medium (19) is arranged in parallel circuitry with the intermediate energy storage medium (18), wherein, during a first time interval, the second control circuit on the primary side (14a) alternately closes the switches of the second primary-side pair of switches (15) and, at the same time, the control circuit on the primary side (14b) closes the switches of the primary-side pair of switches (11), and, at the same time, the control circuit on the secondary side (14c) opens the switches of the secondary-side pair of switches (12), and
wherein, during a second time interval, the second control circuit on the primary side (14a) opens the switches of the second primary-side pair of switches (15) and, at the same time, the control circuit on the primary side (14b) opens the switches of the primary-side pair of switches and, at the same time, the secondary-side control circuit (14c) closes the switches of the secondary-side pair of switches (12).

8. Field device as claimed in at least one of the Claims 1 to 7,
**characterized in that**
the energy storage media (16, 17, 18, 19) are capacitors or storage batteries.

9. Field device as claimed in Claim 8,
**characterized in that**
the capacity of the capacitors and/or the length of the predefined time intervals is such that the minimum energy that the field device requires for operation is always available.

10. Field device as claimed in Claim 8,
**characterized in that**
the switches in the pairs of switches (11, 12, 15) are capacitively decoupled switches.

11. Field device as claimed in Claim 10,
**characterized in that**
the capacitively decoupled switch (24) consists of two switches (22) switched in series and a third switch (22a) switched in parallel, wherein the connecting cable (21) of the two switches (22) is connected to ground in the open state of the capacitively decoupled switch (24) via the third switch (22a).

12. Field device as claimed in Claim 1,
**characterized in that**
the galvanically isolated means of transmission (9, 10) are optical, capacitance or radio-controlled transmission paths.

13. Field device as claimed in one of the Claims 1 to 9 or 12,
**characterized in that**
the switches of the switch pairs (11, 12, 15) are relays or transistors.

## Revendications

1. Appareil de terrain destiné à la mesure ou à la surveillance d'une grandeur process physique ou chimique d'un produit dans la technique d'automatisation avec une sortie courant (6) disposée sur le côté primaire (P) et avec une unité électronique (3, 13) disposée sur le côté secondaire (S), laquelle unité est alimentée en énergie du côté primaire (P) via deux câbles de liaison (4), l'unité électronique (3) pilotant la sortie courant (6) de telle sorte que le courant continu circulant sur les câbles de liaison (4) représente la valeur de la grandeur process mesurée sur le côté secondaire (S), avec au moins une unité de communication (7), qui met à disposition des données numériques (Data), **caractérisée par** un moyen de transmission (9) découplé galvaniquement, lequel moyen transmet les données numériques (Data) entre le côté primaire (P) et le côté secondaire (S), un agencement de circuit étant prévu avec deux interrupteurs d'une paire d'interrupteurs côté primaire (11), un interrupteur de la paire d'interrupteurs côté primaire (11) étant disposé respectivement dans chaque câble de liaison (4), avec deux interrupteurs d'au moins une paire d'interrupteurs côté secondaire (12), un interrupteur de la paire d'interrupteurs côté secondaire (12) étant disposé respectivement dans chaque câble de liaison (4), avec un réservoir intermédiaire d'énergie (18) disposé entre le côté primaire (P) et le côté secondaire S) et un réservoir d'énergie côté secondaire (19) affecté au côté secondaire (S), les deux réservoirs d'énergie (18, 19) étant couplés en parallèle l'un par rapport à l'autre et avec au moins un circuit de commande électronique (14), qui commande les paires d'interrupteurs (11, 12) à tour de rôle de telle sorte que le côté primaire (P) et le côté secondaire (S) sont séparés galvaniquement l'un de l'autre.

2. Appareil de terrain selon la revendication 1,
**caractérisé**
**en ce que** l'appareil de terrain est conçu en tant qu'appareil 2 fils, si bien que l'alimentation en énergie et la communication s'effectuent via les mêmes câbles de liaison (4), ou
**en ce que** l'appareil de terrain est conçu en tant qu'appareil 4 fils, l'alimentation en énergie et la communication s'effectuant via des câbles de liaison séparés.

3. Appareil de terrain selon la revendication 1 ou 2,
**caractérisé**
**en ce que** les composants du côté primaire (P) et les composants du côté secondaire (S) sont disposés dans un même boîtier.

4. Appareil de terrain selon la revendication 1 ou 2,
**caractérisé**
**en ce qu'**une partie des composants du côté primaire (P) est affectée à un premier boîtier, la partie restante des composants du côté primaire (P) et les composants du côté secondaire (S) étant affectés à un deuxième boîtier, et les deux boîtiers étant disposés à distance l'un de l'autre et reliés entre eux par l'intermédiaire d'un câble de liaison (23).

5. Appareil de terrain selon au moins l'une des revendications 1 à 3,
**caractérisé**
**en ce que** le réservoir intermédiaire d'énergie (18) est disposé entre la paire d'interrupteurs côté primaire (11) et la paire d'interrupteurs côté secondaire (12) dans un circuit parallèle,
le réservoir intermédiaire d'énergie côté secondaire étant couplé en aval de la paire d'interrupteurs côté secondaire (12) dans le circuit parallèle avec le réservoir intermédiaire d'énergie (18), et
l'au moins un circuit de commande (14) fermant, à tour de rôle, pendant un premier intervalle de temps prédéfini ou variable, les interrupteurs de la paire d'interrupteurs côté primaire (11) et ouvrant les interrupteurs de la paire d'interrupteurs côté secondaire (12), et fermant, pendant un second intervalle de temps prédéfini ou variable, les interrupteurs de la paire d'interrupteurs côté secondaire (12) et ouvrant les interrupteurs de la paire d'interrupteurs côté primaire (11).

6. Appareil de terrain selon au moins l'une des revendications 1 à 3,
**caractérisé**
**en ce que** sont prévus, dans le circuit parallèle entre la paire d'interrupteurs côté primaire (11) et la paire d'interrupteurs côté secondaire (12), deux réservoirs intermédiaires d'énergie (16, 17),
le réservoir intermédiaire d'énergie côté secondaire étant couplé en aval de la paire d'interrupteurs côté secondaire (12) dans le circuit parallèle avec les deux réservoirs intermédiaires d'énergie (16, 17), et
l'au moins un circuit de commande (14) reliant à tour de rôle, pendant un premier intervalle de temps prédéfini ou variable, via les interrupteurs de la paire d'interrupteurs côté primaire (11), le deuxième réservoir intermédiaire d'énergie (17) avec l'alimentation en énergie (25) et, via l'interrupteur de la paire d'interrupteurs côté secondaire (12), le premier réservoir intermédiaire d'énergie (16) avec le réservoir d'énergie côté secondaire (19) et, pendant un second intervalle de temps prédéfini ou variable, via les interrupteurs de la paire d'interrupteurs côté secondaire (12), le deuxième réservoir intermédiaire d'énergie (17) avec le réservoir d'énergie côté secondaire (19) et, via les interrupteurs de la paire d'interrupteurs côté primaire (11), le premier réservoir intermédiaire d'énergie (16) avec l'alimentation en énergie (25).

7. Appareil de terrain selon l'une ou plusieurs des revendications 1, 2 ou 4,
**caractérisé**
**en ce qu'**est prévu, sur le côté primaire (P), une deuxième paire d'interrupteurs côté primaire (15) avec respectivement un interrupteur dans chacun des deux câbles de liaison (4) et un deuxième circuit de commande côté primaire (14a), les interrupteurs de la paire d'interrupteurs côté primaire (11) et le circuit de commande côté primaire (14b) étant affectés au côté primaire (P),
pour lequel est prévu, sur le côté secondaire (S), la paire d'interrupteurs côté secondaire (12) avec respectivement un interrupteur dans chacun des deux câbles de liaison (4),
le réservoir intermédiaire d'énergie (18) étant disposé dans un circuit parallèle entre la paire d'interrupteurs côté primaire (11) et la paire d'interrupteurs côté secondaire (12),
le réservoir d'énergie côté secondaire (19) étant disposé dans un circuit parallèle au réservoir intermédiaire d'énergie (18),
le deuxième circuit de commande côté primaire (14a) fermant à tour de rôle, pendant un premier intervalle de temps, les interrupteurs de la deuxième paire d'interrupteurs côté primaire (15) et, en même temps, le circuit de commande côté primaire (14b) fermant les interrupteurs de la paire d'interrupteurs côté primaire (11), et en même temps le circuit de commande côté secondaire (14c) ouvrant les interrupteurs de la paire d'interrupteurs côté secondaire (12), et
le deuxième circuit de commande côté primaire (14a) ouvrant, pendant un second intervalle de temps, les interrupteurs de la deuxième paire d'interrupteurs côté primaire (15) et, en même temps, le circuit de commande côté secondaire (14c) fermant les interrupteurs de la paire d'interrupteurs côté secondaire (12).

8. Appareil de terrain selon au moins l'une des revendications 1 à 7,
**caractérisé**
**en ce que**, concernant les réservoirs d'énergie (16, 17, 18, 19), il s'agit de condensateurs ou d'accumulateurs.

9. Appareil de terrain selon la revendication 8,
**caractérisé**
**en ce que** la capacité des condensateurs et/ou la longueur des intervalles de temps prédéfinis sont dimensionnées de telle sorte que l'énergie minimale, dont l'appareil de terrain a besoin pour le fonctionnement, est à tout moment disponible.

10. Appareil de terrain selon la revendication 8,
**caractérisé**
**en ce que**, concernant les interrupteurs des paires d'interrupteurs (11, 12, 15), il s'agit d'interrupteurs à découplage capacitif.

11. Appareil de terrain selon la revendication 10,
**caractérisé**
**en ce que** l'interrupteur à découplage capacitif (24) se compose de deux interrupteurs (22) couplés en série et d'un troisième interrupteur (22a) couplé en parallèle, le câble de liaison (21) des deux interrupteurs (22) étant relié, à l'état ouvert de l'interrupteur à découplage capacitif (24), avec la masse par l'intermédiaire du troisième interrupteur (22a).

12. Appareil de terrain selon la revendication 1,
**caractérisé**
**en ce que**, concernant les moyens de transmission (9, 10) séparés galvaniquement, il s'agit de voies de transmission optiques, capacitives ou radio.

13. Appareil de terrain selon l'une des revendications 1 à 9 ou 12,
**caractérisé**
**en ce que**, concernant les interrupteurs des paires d'interrupteurs (11, 12, 15), il s'agit de relais ou de transistors.
